Europäisches Patentamt

European Patent Office

Office européen des brevets

(11) Publication number: **0 099 441**
**B1**

# (12) EUROPEAN PATENT SPECIFICATION

(45) Date of publication of patent specification: **10.09.86**

(21) Application number: **82810443.0**

(22) Date of filing: **25.10.82**

(51) Int. Cl.⁴: **F 24 D 3/00,** F 24 D 5/00,
F 24 D 17/00

(54) Apparatus for recovery of heat from fumes in a heating system or from the ambient air.

(30) Priority: **21.07.82 CH 4436/82**

(43) Date of publication of application:
**01.02.84 Bulletin 84/05**

(45) Publication of the grant of the patent:
**10.09.86 Bulletin 86/37**

(84) Designated Contracting States:
**AT BE DE FR GB IT LU NL SE**

(56) References cited:
**EP-A-0 013 018**
**DE-A-2 620 395**
**DE-A-2 758 181**
**DE-A-2 936 806**

(73) Proprietor: **Curti, Paolo**
**Via Belsoggiorno 7**
**CH-6500 Bellinzona (CH)**

(72) Inventor: **Curti, Paolo**
**Via Belsoggiorno 7**
**CH-6500 Bellinzona (CH)**

(74) Representative: **Baggiolini, Raimondo et al**
**Racheli & Fiammenghi Via San Gottardo 15**
**CH-6900 Lugano (CH)**

Courier Press, Leamington Spa, England.

## Description

This invention relates to an apparatus based on the known principle of the heat pump, for recovery of heat from fumes in a heating system with purification of them and or of heat from the natural ambient air.

Apparatus comprising a heat pump for recovery heat from fumes with purification of them and for independently recovering heat from ambient air are known. They are seen, for example, in DE—A—2.936.806 and in DE—A—2.620.395.

Said known apparatus comprise:

means carrying downward the fumes from the heating system to an evaporator by the suction action of a fan; the condenser of the heat pump giving up to the user the heat taken from the fumes and/or air, wherein said evaporator cools the mixture with a resulting purification of the fumes themselves; said condenser including two independent circuits: one for the return of the heating water from the user, the other through which the heat pump fluid (Freon) travels.

The apparatus according to the present invention differs from those according to the cited prior art by the presence of an additional condenser which allows to reach high temperatures in the return of the heating water, increasing the efficiency of the whole and of the shape of the evaporator made up of ducts and coils with preferably straight, horizontal sections, that are licked by the mixture of rising fumes and or air, allowing, besides the expansion, a condensation and optimal removal of the noxious products of the gas which, in rising, lick them.

The apparatus according to the present invention is therefore characterized by at least a duct carrying the fumes from the heating system downward to a lower mixing chamber in which the fumes, mixed with ambient air, are carried upward through the evaporator; said evaporator being made up of coils with preferably straight, horizontal sections that are licked by the mixture of rising fumes and/or air, in order to allow besides their expansion, a condensation and optimal removal of the noxious products of the gas which, in rising, lick them; the amount of ambient air being brought into said mixing chamber through a valve, which is controlled by a probe in the mixing chamber, valve disposed upstream from an additional condenser through which the fluid (Freon) travels and which is put into the piping immediately after the main condenser; the evaporator being provided with a system for automatic defrosting, performed by reversing the cycle.

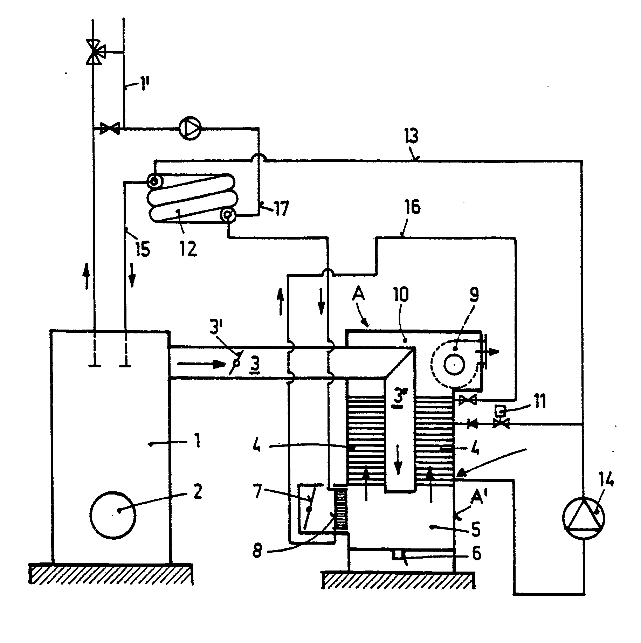

For greater clarity, the accompanying drawing represents a preferred embodiment of this apparatus.

Specifically, the single figure diagrammatically shows a boiler heating system with this apparatus incorporated.

With reference to the figure, boiler 1 is equipped with a burner 2. From boiler 1, the hot fumes are carried through duct 3, provided with valve 3', which can be operated by hand in the unit of apparatus A which is made like a closed box. After a 90° downward bend 3" of closed duct 3, the fumes are directed vertically upward, going through evaporator 4, which is part of the heat pump system. The hot fumes, carried by at least a closed duct 3", undergoing a preheating in their travel downward into chamber 5 under evaporator 4, come into a chamber that is intended for mixing of the fumes with the ambient air. An outlet 6 for the condensate that precipitates from evaporator 4 is attached to the base of mixing chamber 5.

Intake of natural ambient air into mixing chamber 5 is performed by a butterfly valve 7, which is upstream from an additional condenser 8, said valve regulates the flow of air aspirated through said condenser as a function of the temperature in the mixing chamber 5.

Said butterfly valve 7 is controlled by a probe, not better shown in the drawings, said probe is placed on the inside of mixing chamber 5. In this way the efficiency of the heat pump, which comprises said evaporator unit 4 and main condenser 12, better described below, is kept at maximum efficiency value, further enabling them to assure an effective purification of the fumes at any temperature of the ambient air.

After the fumes from the boiler have been mixed with ambient air, the mixture or only the natural ambient air on leaving the mixing chamber 5 goes up through evaporator unit 4. Mixing chamber 5 has a parallelipiped shape to cause a considerable turbulence in it and therefore a perfect mixing of the fumes and air.

Said rising passage is helped by a fan 9 mounted contiguous to collection chamber 10, which is above mixing chamber 5 and evaporator 4. Fan 9, moreover, advantageously constitutes the only drawing of the fumes that are generated in the boiler.

Evaporator 4 consists of a large number of coils. More precisely, the straight sections of the coils, which are licked by the mixture of fumes and rising air, are placed horizontally while their head connections are inclined. A fluid, advantageously consisting of dichlorodifluoromethane marketed as Freon 22, circulates in the bank of coils, preferably made of copper pipe.

Butterfly valve 7, which is placed upstream from the additional condenser 8 or mixing chamber 5 and varies the amount of natural ambient air, makes it possible to maintain a constant temperature in chamber 5.

Fan 9 for removing the mixture of purified gas and/or cooled air is of the constant capacity type.

Apparatus A can be considered self-sufficient in removing heat only from the ambient air to produce hot water for domestic use and for required heating up to a certain outside temperature.

The boiler, equipped with a burner, therefore constitutes a supplement limited to cold periods.

There will be a continuous production of hot water in the summer while the burner is cut off.

On the other hand, in the cold period, namely the winter or when the condenser is producing hot water, the burner will go on to meet heating requirements.

As already said, when burner 2 is off, the air that is exhausted from apparatus A by fan 9, after a certain amount of heat has been extracted from it, can advantageously be used for air conditioning a closed area.

Advantageously, evaporator 4 is equipped with a system for automatic defrosting by reversal of the cycle provided with expansion valve 11. This system in turn is controlled by a pressure switch which gives the defrost order only when the evaporator is covered with ice.

Besides controlling the defrosting operation, the pressure switch, not shown better in the drawings, which is placed in the Freon gas piping going into the compressor, momentarily cuts off burner 2 to prevent fan 9 from exhausting fumes that have not been cooled and purified.

The operation of defrosting evaporator 4 lasts about one to two minutes.

Said additional condenser 8 makes further cooling of the Freon or other suitable liquid possible to enable main condenser 12 to stay at a rather high temperature, namely 70—80°.

The apparatus assures purification of the fumes even at high condensation temperatures.

With reference to the figure it is noted that in a central heating system, main condenser 12 is placed on the boiler hot water return with countercurrent operation. Going from its ends, main condenser 12 exhibits at the top the hot (Freon) gas intake connection, compressor 14 is placed on duct 13.

Hot water outlet connection 15 is placed above liquid Freon connection 16 and cold water heating intake connection 17.

With a mixture of fumes and ambient air put in mixing chamber 5, in apparatus A, and by the action of evaporator 4, numerous noxious gaseous components, such as sulfur dioxide and others, are eliminated from the fumes by precipitation, along with a considerable amount of water, contained in the air, further dehumidifying what is exhausted by the fan.

Besides the notable energy saving in the heating system, the apparatus makes possible the almost total elimination of noxious gaseous and solid components from the fumes with indisputable advantages from the ecological viewpoint.

## Claim

Apparatus, based on the principle of the heat pump, for recovery of heat from fumes in a heating system with purification of them and or of heat from the natural ambient air, comprising means carrying downward the fumes from the heating system to an evaporator by the suction action of a fan; the condenser of the heat pump giving up to the user the heat taken from the fumes and/or air, wherein said evaporator cools the mixture with a resulting purification of the fumes themselves; said condenser including two independent circuits: one for the return from the user, the other through which the heat pump fluid (Freon) travels, characterized by at least a duct (3) carrying the fumes from the heating system (1) downward to a lower mixing chamber (5) in which the fumes, mixed with ambient air, are carried upward through the evaporator (4); said evaporator (4) being made up of coils with preferably straight, horizontal sections that are licked by the mixture of rising fumes and/or air, in order to allow besides their expansion, a condensation and optimal removal of the noxious products of the gas which, in rising, lick them; the amount of ambient air being brought into said mixing chamber (5) through a valve (7), which is controlled by a probe in the mixing chamber (5), valve (7) disposed upstream from an additional condenser (8) through which the fluid (Freon) travels and which is put into the piping immediately after the main condenser (12); the evaporator (4) being provided with a system for automatic defrosting, performed by reversing the cycle.

## Patentanspruch

Gerät, das auf dem Prinzip einer Wärmepumpe basiert, zur Wärmerückgewinnung aus Abgasen des Erhitzungssystemes mit Abgasreinigung und/oder zur Wärmerückgewinnung aus der Umgebungsluft, mit einer Einrichtung zum Leiten der Abgase durch die Saugwirkung eines Ventilators von dem Erhitzungssystem nach unten zu einem Verdampfer, wobei der Kondensator der Wärmepumpe die aus den Abgasen und/oder der Luft gewonnene Wärme an den Benutzer abgibt, wodurch der Verdampfer das Gemisch abkühlt, mit einer sich daraus ergebenden Selbstreinigung der Abgase, und wobei der Kondensator zwei unabhängige Kreisläufe aufweist, von denen einer für den Rücklauf vom Benutzer vorgesehen ist, und der andere zur Durchleitung des Strömungsmittels (Freon) der Wärmepumpe, dadurch gekennzeichnet, daß mindestens eine Leitung (3) vorgesehen ist, durch welche die Abgase von dem Erhitzungssystem (1) nach unten zu einer niedrigeren Mischkammer (5) geleitet werden, in der die mit Umgebungsluft gemischten Abgase durch den Verdampfer (4) nach oben geleitet werden, daß der Verdampfer (4) aus Spulen aufgebaut ist, die vorzugsweise gerade horizontale Abschnitte aufweisen, die durch das Gemisch aus ausströmenden Gasen und/oder Luft umströmt werden, um außer deren Ausdehnung eine Kondensation und eine optimale Entfernung der Schadstoffe aus dem Gas zu ermöglichen, das beim Ausströmen die Abschnitte umstromt, daß der Anteil der Umgebungsluft in die Mischkammer (5) durch ein Ventil (7) eingebracht wird, das durch eine in der Mischkammer (5) befindliche Probe gesteuert wird, wobei das Ventil (7) stromaufwärts von einem zusätzlichen Kondensator (8) angeordnet ist, durch den das Strömungsmittel (Freon) strömt, und der in der Rohrleitung — unmittelbar nach dem Hauptkondensator (12) eingesetzt ist, und daß der Verdampfer (4) mit einer durch Kreislaufumkehr funktionierenden Abtau-automatik ausgebildet ist.

## Revendication

Appareil, basé sur le principe de la pompe à chaleur, pour la récupération de la chaleur des fumées dans un système de chauffage avec leur épuration et/ou de la chaleur prélevée sur l'air ambiant naturel, comprenant un moyen entraînant les fumées vers le bas à partir du système de chauffage jusqu'à un évaporateur par l'action d'aspiration d'un ventilateur; le condenseur de la pompe à chaleur fournissant à l'utilisateur la chaleur prélevée des fumées et/ou de l'air tandis que ledit évaporateur refroidit le mélange avec épuration résultante des fumées elles-mêmes; ledit condenseur comprenant deux circuits indépendants: l'un pour le retour provenant de l'utilisateur, l'autre à travers lequel passe le fluide de la pompe à chaleur (fréon), caractérisé par au moins un conduit (3) entraînant les fumées du système de chauffage (1) vers le bas jusqu'à une chambre de mélange inférieure (5) de laquelle les fumées, mélangées à l'air ambiant, sont évacuées vers le haut à travers l'évaporateur (4); ledit évaporateur (4) étant composé de spires avec sections horizontales de préférence rectilignes qui sont léchées par le mélange de fumées montantes et/ou d'air, afin de permettre en plus de leur détente une condensation et un enlèvement optimal des produits nocifs du gaz qui en s'élevant les lèchent; la quantité d'air ambiant étant introduite dans la dite chambre de mélange (5) à travers une valve (7) qui est commandée par une sonde dans la chambre de mélange (5), la valve (7) étant disposée en amont d'un condenseur additionnel (8) à travers lequel passe le fluide (fréon) et qui est placé dans la tuyauterie (17') immédiatement après le condenseur principal (12); l'évaporateur (4) étant muni d'un système pour le déglaçage automatique accompli par inversion du cycle.

0 099 441

1